# NOUVEAU FASCICULE DE BREVET EUROPEEN

(11) **EP 0 971 562 B2**
(45) Date de publication et mention de la décision concernant l'opposition: **12.03.2014**
(45) Mention de la délivrance du brevet: 22.11.2006
(21) Numéro de dépôt: 98401760.8
(22) Date de dépôt: 10.07.1998
(51) Int. Cl.: H05B 6/12

(54) **Foyer de cuisson par induction multi-usages**
Mehrzweck-Induktionskochherd
Multiple use induction cooktop

(43) Date de publication de la demande: 12.01.2000
(73) Titulaire: FAGORBRANDT SAS, 92500 Rueil Malmaison (FR)
(72) Inventeur: Doussal, Stéphane, 94117 Arcueil Cedex (FR); Gaspard, Jean-Yves, 94117 Arcueil Cedex (FR)
(74) Mandataire: Santarelli

(56) Documents cités:
- DE-A- 3 704 581
- DE-A- 19 500 449
- DE-U- 9 413 820
- FR-A- 2 315 819
- GB-A- 2 199 720

## Description

La présente invention se rapporte à un foyer de cuisson par induction multi-usages.

Dans certains domaines industriels, il arrive que des produits fabriqués en très grandes séries pour un usage "grand public" (domestique) puissent être adaptés à un usage "professionnel", pour lequel les produits sont généralement fabriqués en petites séries. Si l'adaptation peut être réalisée facilement et si la plupart des éléments des produits grand public peuvent être utilisés tels quels ou moyennant des modifications mineures, on peut réduire significativement le prix de revient des produits à usage professionnel.

Le domaine de la cuisson par induction est un domaine dans lequel une telle adaptation serait économiquement intéressante. En effet, les foyers de cuisson par induction à usage grand public sont annuellement produits à plusieurs centaines de milliers d'exemplaires en Europe, tandis que ceux à usage professionnel (pour les restaurants par exemple) sont annuellement produits à quelques milliers d'exemplaires. Il faut toutefois noter que les inducteurs des foyers à usage professionnel doivent avoir des dimensions beaucoup plus grandes et une puissance plus élevée que celles des inducteurs de foyers à usage grand public, du fait que les casseroles professionnelles sont beaucoup plus grandes que celles à usage domestique.

Une première solution serait de brancher en parallèle plusieurs générateurs sur des inducteurs multiples, comme indiqué par exemple dans la demande de brevet français 9414818, ces inducteurs étant concentriques, comme indiqué dans le brevet français 2672763 et dans le brevet européen 0498735. Cependant, une telle solution nécessite, pour permettre d'associer plusieurs générateurs de faible puissance, une synchronisation de la fréquence et de la phase des différents générateurs. En effet, l'importante mutuelle induction entre les enroulements concentriques des différents inducteurs produit des battements de fréquences entre les générateurs, lorsque ceux-ci fonctionnent à des fréquences différentes Ces battements se produisent à des fréquences audibles très gênantes pour les utilisateurs. La mise en oeuvre de la synchronisation des générateurs est techniquement facile à réaliser, mais ceci entraîne la déstandardisation des générateurs. Ceci va à l'encontre de l'objectif exposé ci-dessus, à savoir l'uniformisation des composants pour usages grand public et professionnel.

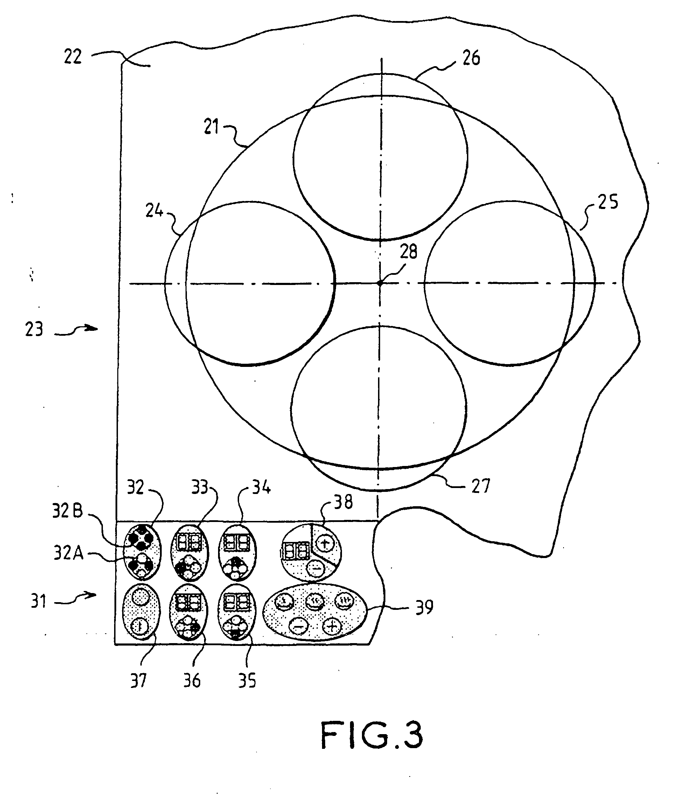

On connaît d'après la demande de brevet allemand 19 500 449 et la demande de brevet européen correspondante 0 722 261 une plaque de cuisson comportant, entre autres, des foyers de cuisson à induction. Dans une des configurations envisagées (figure 3), plusieurs inducteurs, extérieurs l'un à l'autre, peuvent être alimentés simultanément pour chauffer un récipient de grand diamètre. Chacun de ces inducteurs est alimenté par son propre convertisseur. Dans cette configuration connue, les inducteurs sont très proches les uns des autres, et lorsque plusieurs d'entre eux sont alimentés simultanément, afin de chauffer un grand récipient, comme représenté en figure 3, l'importante mutuelle induction entre les inducteurs alimentés, entraîne les mêmes nuisances que celles évoquées ci-dessus, si l'on ne synchronise pas en fréquence et en phase leur alimentation. DE 37 12 242 A1 et DE 36 10 196 A1 décrivent un couple d'inducteurs reliés alternativement à un générateur par un commutateur.

La présente invention a pour objet un foyer de cuisson par induction pour usage professionnel qui puisse utiliser des éléments déjà utilisés dans les produits grand public, avec le minimum possible de modifications ou d'adaptation de ces éléments grand public, tout en obtenant des foyers qui puissent chauffer de la façon la plus homogène possible des récipients de tailles différentes et qui respecte les normes de perturbations électromagnétiques.

Le foyer de cuisson conforme à l'invention est défini par la revendication 1.

De façon avantageuse, le foyer comporte un dispositif détecteur de désadaptation d'un groupe d'inducteurs en fonction du décentrement du récipient recouvrant au moins deux inducteurs, et un dispositif indicateur de ce décentrement.

La présente invention sera mieux comprise à la lecture de la description détaillée de plusieurs modes de réalisation, pris à titre d'exemples non limitatifs et illustrés par le dessin annexé, sur lequel :
- la figure 1 est une vue partielle en perspective d'un foyer de cuisson à deux inducteurs standard en usage grand public, avec représentation du schéma simplifié du générateur correspondant,
- la figure 2 est une vue simplifiée en perspective d'un foyer de cuisson, conforme à l'invention, avec quatre inducteurs standard alimentés par deux générateurs standard, les inducteurs et générateurs étant les mêmes que ceux de la figure 1,
- la figure 3 est une vue de dessus partielle du foyer de la figure 2, sans récipient,
- la figure 4 est une vue de dessus partielle du foyer de la figure 2, sur lequel est posé correctement un récipient oblong,
- la figure 5 est une vue en plan des conducteurs d'un exemple de réalisation d'un foyer comprenant quatre inducteurs standard de formes particulières réalisés en technologie imprimée, pouvant être utilisé par l'invention,
- la figure 6 est une vue en plan simplifiée d'un exemple de réalisation d'un dispositif indicateur de décentrement de récipient par rapport à un groupe correspondant d'inducteurs, conformément à l'invention, et
- la figure 7 est une vue en plan simplifiée d'un exemple de réalisation de foyer à trois inducteurs conforme à l'invention.

La présente invention est décrite ci-dessous en référence à la réalisation d'un foyer de cuisson par induction pour la cuisine professionnelle, mais il est bien entendu qu'elle peut être mise en oeuvre dans d'autres applications que la cuisine.

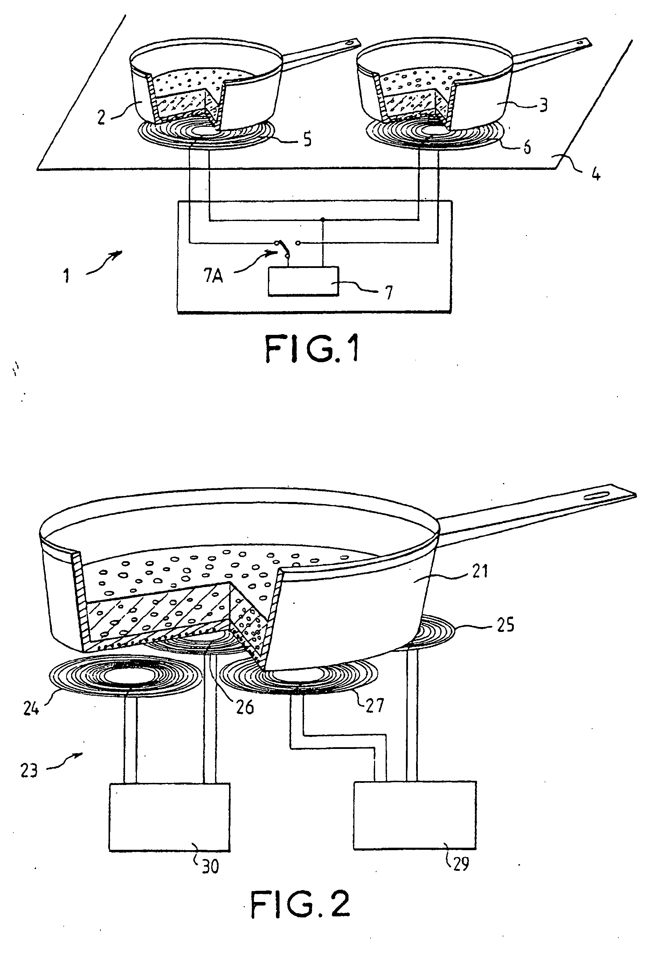

L'appareil de cuisson représenté en figure 1 est composé de deux foyers de cuisson domestique destinés à chauffer par induction des casseroles telles que les casseroles 2, 3 par exemple posées sur une plaque-support 4, par exemple en vitrocéramique, au-dessus de deux inducteurs, respectivement 5, 6 fixés sous la plaque-support 4. Les fonds de casseroles 2, 3 ont par exemple sensiblement la même surface que les inducteurs 5, 6. Il faut toutefois noter que l'on peut chauffer à puissance réduite une casserole de diamètre inférieur à celui de l'inducteur (par exemple une casserole de diamètre 100 mm sur un inducteur de diamètre 160 mm). Les inducteurs 5, 6 sont reliés à un générateur haute fréquence 7 par l'intermédiaire d'un commutateur 7A permettant d'envoyer la puissance du générateur alternativement à l'inducteur 5 et à l'inducteur 6. Des puissances différentes peuvent être fournies aux deux inducteurs en agissant sur le rapport cyclique de commutation. Dans un exemple de réalisation, un foyer de cuisson comporte quatre inducteurs, chaque groupe de deux inducteurs étant alimenté par un générateur de 2800W par l'intermédiaire d'un commutateur. Ces inducteurs ont un diamètre de 160mm et délivrent chacun une puissance maximale de 1400W (c'est-à-dire 2800W avec un rapport cyclique de 0,5).

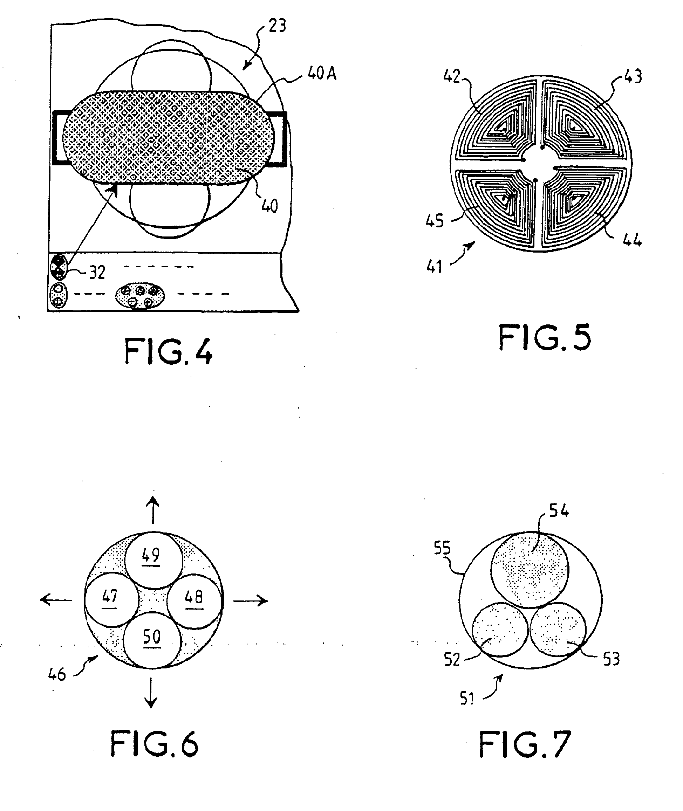

On a représenté en figure 2 une casserole 21 à usage professionnel, beaucoup plus grande que les casseroles 2 et 3. Dans le présent exemple, la casserole 21, de section circulaire comme les casseroles 2 et 3, a un diamètre qui est d'environ de 380 mm. L'appareil de cuisson 22, partiellement représenté sur ces figures, comporte plusieurs foyers pouvant chacun chauffer par induction une casserole telle que la casserole 21, ou bien, comme représenté en figures 4 et 7, des casseroles de dimensions plus grandes que celles des casseroles 2 et 3, mais de dimensions ou de formes différentes de celles de la casserole 21. Sur les figures 4 et 7, on a représenté par un cercle le fond de la casserole placée sur le foyer. Ce cercle pourrait aussi, par exemple, correspondre à un marquage (sérigraphié par exemple) réalisé sur la plaque isolante recouvrant les inducteurs, afin de matérialiser, pour l'usager, l'emplacement du foyer pour grandes casseroles. Le foyer 23, seul représenté sur les figures 2 et 3, comporte quatre inducteurs, référencés 24 à 27, identiques aux inducteurs 5 et 6, identiques entre eux et dénommés "inducteurs standard", c'est-à-dire inducteurs fabriqués en grande série pour les appareils domestiques, et donc à bas coût. Les inducteurs 24 et 25 sont disposés symétriquement par rapport au centre 28 du foyer 23, de même que les inducteurs 26 et 27. Les centres des inducteurs 24 à 27 sont tous équidistants du centre 28 et donc disposés sur un cercle le long duquel ils sont régulièrement espacés.

Afin de minimiser les effets de mutuelle induction entre inducteurs, les générateurs alimentent de préférence simultanément deux inducteurs disposés symétriquement par rapport au centre 28, c'est à dire les inducteurs les plus éloignés l'un de l'autre. Ainsi, dans le cas illustré en figures 2 et 3, les inducteurs 24 et 26 sont alimentés périodiquement par un premier générateur 30, tandis que les inducteurs 25 et 27 sont alimentés périodiquement par un second générateur 29, c'est-à-dire qu'à une alternance donnée, le générateur 29 alimente l'inducteur 25 et le générateur 30 alimente l'inducteur 24, et à l'alternance suivante, les deux autres inducteurs sont alimentés par les générateurs correspondants. Ainsi, on réduit le risque d'interférences entre inducteurs alimentés simultanément par deux générateurs asynchrones. Les générateurs 29 et 30 sont identiques au générateur 7, et sont de type « standard », c'est-à-dire identiques à ceux des appareils grand public, et ne seront donc pas décrits. Bien entendu, dans le cas où l'utilisateur de l'appareil 22 désire chauffer une casserole de petites dimensions, telle que les casseroles 2 et 3, celle-ci est placée, de façon centrée, au-dessus de l'un des inducteurs 24 à 27, et seul cet inducteur est alimenté par le générateur correspondant. De même, lorsque plusieurs casseroles de petites dimensions doivent être chauffées en même temps sur un même foyer, les inducteurs correspondants sont alimentés par leur générateur, l'énergie envoyée par chacun des inducteurs pouvant être réglée par l'utilisateur en niveau et en durée.

Sur la figure 3, on a représenté un exemple de réalisation de clavier 31 de commande des inducteurs du seul foyer 23. Dans cet exemple, le clavier comporte huit ensembles tactiles et d'affichage, référencés 32 à 39.

Les touches de ces ensembles (voir figure 4) commandent respectivement la mise en route de deux ou quatre inducteurs (la touche 32 comporte en fait deux touches individuelles 32A, 32B commandant respectivement la mise en route de deux et de quatre inducteurs), de l'inducteur 24 (touche 33), de l'inducteur 26 (touche 34), de l'inducteur 27 (touche 35), et de l'inducteur 25 (touche 36), la marche/arrêt de l'ensemble du foyer 23 (touche 37), la minuterie de temps de cuisson de chaque inducteur désigné (touches de l'ensemble 38) et le réglage de puissance (par bonds et progressif) de chaque inducteur désigné (touches de l'ensemble 39). Ces touches comportent avantageusement des indicateurs lumineux et des afficheurs numériques désignant la sélection des inducteurs, et dans le cas de la sélection de 2 ou 4 des inducteurs composant le foyer, du temps de fonctionnement présélectionné. En effet, le clavier ne comporte pas, dans le présent exemple, d'affichage du temps de fonctionnement pour les 4 inducteurs séparément, mais uniquement au niveau du foyer seul, et ceci pour des raisons de simplicité d'utilisation, mais il est bien entendu que l'affichage pourrait se faire séparément.

On a représenté en figure 4 le cas de l'utilisation du foyer 23 avec un récipient oblong 40 (dit "plat à poisson"). Ce récipient recouvre entièrement, lorsqu'il est correctement placé, les inducteurs 24 et 25. Il est donc chauffé par ces deux inducteurs, commandés en même temps par la touche 32A, mais alimentés alternativement..

On a représenté en figure 5 un exemple de réalisation d'un foyer à quatre inducteurs, tel que décrit dans la demande de brevet français 96 05978, étant bien entendu que les inducteurs peuvent être réalisés selon toute autre technique connue. On rappellera seulement que ce mode de réalisation fait appel à la technologie des circuits imprimés, et que l'inducteur (41) se compose de quatre quadrants (42 à 45) en forme de secteurs circulaires à angle au centre de 90°, chaque quadrant étant, dans ce mode de réalisation, équivalent à un des inducteurs décrits ci-dessus (24, 25, 26 et 27, respectivement).

On a représenté en figure 6 un exemple de réalisation d'un indicateur lumineux de décentrement d'un récipient par rapport aux inducteurs (ou à l'inducteur) au dessus desquels (duquel) il est placé. Lorsqu'un récipient est placé au-dessus d'un groupe d'inducteurs, le générateur (ou les générateurs) alimentant ces (cet) inducteur(s) perçoit (perçoivent) une nouvelle impédance différente de celle perçue en l'absence de récipient. Cette nouvelle impédance dépend des dimensions du récipient et de sa position par rapport aux inducteurs, en particulier lorsqu'il ne recouvre pas de la même façon tous les inducteurs qui doivent le chauffer. Par conséquent, l'analyse de l'impédance de la charge du générateur (des générateurs), constituée par chacun des inducteurs et le récipient éventuellement présent au-dessus d'eux, permet de déterminer s'il y a bien un tel récipient, et si oui, si ce récipient est grand ou petit et s'il est décentré ou non par rapport aux inducteurs correspondants. Une telle analyse peut être faite pendant une phase préliminaire à l'alimentation en puissance des inducteurs, et pendant les phases de fonctionnement en puissance du foyer, phase préliminaire pendant laquelle un signal haute fréquence de faible énergie est envoyé successivement aux différents inducteurs concernés, et l'impédance correspondante mesurée de façon connue en soi. Les différentes impédances mesurées sont ensuite comparées entre elles. Pour mettre en oeuvre cette comparaison, on peut par exemple déterminer une valeur "moyenne" de ces impédances (telle que le barycentre des impédances) et déterminer les écarts respectifs par rapport à cette valeur moyenne. Ces écarts peuvent être traduits en un signal dont l'amplitude est fonction de l'écart, et ce signal peut alimenter un témoin lumineux dont la luminance est fonction de l'amplitude de ce signal. Ainsi, dans l'exemple de la figure 6, le dispositif 46, disposé par exemple à côté des touches du clavier 31 (figure 3) comporte quatre témoins lumineux 47 à 50 correspondant aux inducteurs 24 à 27. Lorsque le récipient 21 est centré par rapport aux quatre inducteurs, les témoins 47 à 50 sont éteints. Lorsqu'il est décentré, le(s) témoin(s) correspondant(s) s'illumine(nt) en fonction de ce décentrement, indiquant ainsi à l'utilisateur le sens du déplacement à faire subir au récipient pour obtenir son centrage correct. En effet, un bon centrage du récipient permet d'obtenir le rendement maximal possible du dispositif de chauffage et de diminuer les perturbations provoquées par le flux de fuites magnétiques. Bien entendu, il est possible d'adapter une telle indication à un foyer comportant au moins deux inducteurs.

On a représenté en figure 7 un exemple de réalisation de foyer de cuisson à inducteurs de dimensions différentes. Le foyer 51 de la figure 7 comporte deux inducteurs 52 et 53 identiques aux inducteurs précédemment décrits et un inducteur 54 de dimensions plus grandes. Par exemple, et de façon non limitative, les inducteurs 52 et 53 ont un diamètre de 160 mm et l'inducteur 54 a un diamètre de 185mm. On a représenté en 55 le fond de la casserole chauffée par ces trois inducteurs. Ces trois inducteurs sont tangents, le cercle qui leur est circonscrit ayant un diamètre d'environ 340mm. Selon un exemple de réalisation, l'inducteur 54 peut fournir une puissance de 2 800W, et les inducteurs 52, 53 peuvent être des inducteurs de puissance nominale 2800W mais alimentés avec un rapport cyclique de 0,5 et donc fournir 1 400W chacun. Les puissances des deux générateurs, alimentant respectivement l'inducteur 54 et les deux inducteurs 52 et 53 (selon ledit rapport cyclique de 0,5) sont alors les mêmes, et l'on peut donc utiliser un seul type de générateur. Un premier avantage d'une telle solution est de permettre l'utilisation de récipients de deux diamètres différents en fonctionnement à inducteurs séparés. Un autre avantage est que le foyer occupe une surface minimale et fonctionne de façon optimisée avec des récipients ayant un diamètre intermédiaire entre celui des récipients 2 ou 3 et 21 (c'est-à-dire, que pour l'exemple précité, des récipients ayant un diamètre d'environ 340mm).

Dans tous les modes de réalisation décrits ci-dessus, tous les inducteurs sont disposés sur un support mécanique unique en matériau amagnétique, en aluminium par exemple, qui canalise leur flux de fuite. De façon avantageuse, on peut entourer chaque inducteur d'un anneau de garde pour limiter son rayon d'action par compensation du champ de l'inducteur, rayonné autour de l'inducteur (à l'extérieur du volume constitué par l'inducteur et le récipient correspondant) par un champ de courants induits en opposition de phase.

La plaque de matériau isolant (vitrocéramique par exemple) recouvrant les inducteurs et servant de support aux récipients à chauffer doit généralement comporter un marquage indicatif (par exemple sérigraphié) de l'emplacement des inducteurs pour permettre à l'utilisateur de placer correctement ces récipients. Dans le cas de la présente invention, ce marquage comporte en outre l'indication de l'emplacement des récipients chauffés par deux ou plusieurs inducteurs. Ainsi, par exemple pour les foyers des figures 2 et 3 ou 7, ce marquage peut être un cercle circonscrit aux emplacements des inducteurs individuels, et dans le cas du foyer de la figure 4, ce marquage peut correspondre au contour 40A du récipient 40, comme représenté sur cette figure.

Dans les modes de réalisation à inducteurs identiques (figures 2, 3, 4), la puissance totale du foyer peut par exemple être de 5 600W. Les inducteurs sont alors alimentés par deux générateurs de 2 800W chacun, ou bien quatre générateurs de 1 400W ou même huit générateurs de 700W chacun. De façon générale, chaque générateur est couplé à au moins un inducteur ou à plusieurs inducteurs par l'intermédiaire d'un commutateur.

Grâce à l'invention, l'utilisateur du foyer de cuisson peut sélectionner soit un ou plusieurs inducteurs chauffant chacun un récipient de petites dimensions (comme dans l'art antérieur), soit la moitié ou la totalité des inducteurs du foyer afin de chauffer un récipient unique recouvrant cette pluralité d'inducteurs. En variante, non revendiquée, la détection d'un récipient de grand diamètre recouvrant le foyer composé par exemple de quatre inducteurs se fait automatiquement, sans que l'utilisateur ait à sélectionner par la touche 32B la configuration appropriée d'inducteurs, moyennant le rajout d'un capteur approprié (fonctionnant par induction, par exemple) disposé au centre (28) du foyer. En effet, lorsque un ou plusieurs petits récipients sont placés (à peu près correctement) sur le foyer, son centre n'est pas recouvert, ce que ledit capteur approprié peut détecter, et le foyer est alors configuré automatiquement en mode inducteurs séparés pour fonctionner avec des récipients distincts de petits diamètres ou commandés simultanément pour fonctionner avec un récipient de grand diamètre (grâce à des moyens dont la réalisation est évidente pour l'homme de l'art à la lecture de la présente description).

Bien entendu, on peut assembler côte-à-côte plusieurs foyers, tels que le foyer 23, en alimentant simultanément les inducteurs les plus éloignés les uns des autres, et en alimentant alternativement ceux qui sont proches les uns des autres. Le clavier de commande (similaire au clavier 31) est alors avantageusement commun à l'ensemble des inducteurs.

## Revendications

1. Foyer de cuisson par induction multi-usages, comportant au moins deux inducteurs identiques (24-27, 52-54) extérieurs l'un à l'autre, la surface occupée par au moins deux inducteurs étant sensiblement égale à la surface d'au moins une partie des récipients à chauffer (21, 40), **caractérisé en ce qu'**il comporte au moins un générateur alternativement relié par un commutateur à chacun des inducteurs d'un couple d'inducteurs, ledit foyer de cuisson permettant la mise en service d'un ou plusieurs inducteurs indépendamment les uns des autres chauffant chacun un récipient distinct et permettant la mise en service d'au moins deux inducteurs alternativement chauffant un récipient unique recouvrant lesdits inducteurs, et **en ce qu'**il comporte un clavier de commande (31) permettant de commander la mise en route de l'un quelconque des inducteurs dudit foyer, ou bien de plusieurs d'entre eux indépendamment les uns des autres, chacun chauffant un récipient correspondant, et permettant de commander la mise en route de plusieurs d'entre eux ou de leur totalité commandés en même temps par une touche (32A, 32B), dudit clavier de commande, afin de chauffer un même récipient par cette pluralité d'inducteurs.

2. Foyer selon la revendication 1, **caractérisé en ce que** dans un foyer à quatre inducteurs identiques (24-27), lesdits inducteurs sont disposés symétriquement par rapport au centre du foyer (28), leurs centres étant disposés sur un cercle et régulièrement espacés, des inducteurs dont les centres sont disposés sur le même diamètre (24-25 ou 26-27) étant alimentés par des générateurs différents (30, 29).

3. Foyer selon la revendication 2, comportant deux générateurs, **caractérisé en ce que** dans chaque couple d'inducteurs dont les centres sont disposés sur le même diamètre, les inducteurs sont alimentés simultanément chacun par un générateur, et qu'il y a basculement cyclique d'un couple d'inducteurs à l'autre.

4. Foyer selon l'une des revendications 1 à 3, **caractérisé en ce qu'**il comporte des inducteurs de diamètres différents (52-53, 54).

5. Foyer selon l'une des revendications précédentes, **caractérisé en ce que** les inducteurs du foyer sont disposés sur un même support unique en matériau amagnétique.

6. Foyer selon l'une des revendications précédentes, **caractérisé en ce que** les inducteurs sont entourés respectivement d'un anneau de garde.

7. Foyer selon l'une des revendications précédentes, **caractérisé en ce que** le foyer comporte un dispositif détecteur de désadaptation d'un groupe d'inducteurs en fonction du décentrement du récipient recouvrant au moins deux inducteurs, et un dispositif indicateur de ce décentrement (46).

8. Foyer selon la revendication 1, **caractérisé en ce que** le clavier permet de commander individuellement la puissance fournie aux inducteurs (39) et le temps pendant lequel cette puissance leur est fournie (38).

9. Procédé de cuisson par induction sur un foyer selon l'une des revendications 1 à 8, comportant plusieurs inducteurs (24-27 ; 52-54), **caractérisé en ce qu'**il comprend une étape de mise en service d'au moins une paire desdits inducteurs alternativement afin de chauffer un récipient dont le fond a des dimensions sensiblement égales à la surface circonscrite auxdits plusieurs inducteurs, et une étape de mise en service d'un ou plusieurs inducteurs indépendamment les uns des autres afin de faire chauffer par chaque inducteur un récipient correspondant ayant des dimensions sensiblement égales aux dimensions dudit inducteur.

## Patentansprüche

1. Mehrzweck-Induktionskochstelle mit mindestens zwei identischen Induktoren (24-27, 52-54), die voneinander getrennt sind, wobei die von mindestens zwei Induktoren eingenommene Fläche im Wesentlichen der Fläche mindestens eines Teils der zu erwärmenden Gefäße (21, 40) entspricht, **dadurch gekennzeichnet, dass** sie mindestens einen Generator aufweist, der über einen Schalter abwechselnd mit jedem der Induktoren eines Induktorenpaares verbunden ist, wobei es mit der Kochstelle möglich ist, einen oder mehrere Induktoren unabhängig voneinander in Betrieb zu nehmen, die jeweils ein getrenntes Gefäß erwärmen, und mindestens zwei Induktoren abwechselnd in Betrieb zu nehmen, die ein einziges Gefäß erwärmen, das die Induktoren bedeckt, und dass sie ein Steuerungstastenfeld (31) aufweist, mit dem es möglich ist, das Einschalten eines beliebigen der Induktoren der Kochstelle oder auch mehrerer dieser Induktoren unabhängig voneinander zu steuern, wobei jeder ein entsprechendes Gefäß erwärmt, und das Einschalten mehrerer dieser Induktoren oder aller Induktoren zu steuern, die gleichzeitig über eine Taste (32A, 32B) des Steuerungstastenfelds gesteuert werden, um ein und dasselbe Gefäß durch diese Vielzahl von Induktoren zu erwärmen.

2. Kochstelle nach Anspruch 1, **dadurch gekennzeichnet, dass** bei einer Kochstelle mit vier identischen Induktoren (24-27) die Induktoren symmetrisch zur Mitte der Kochstelle (28) angeordnet sind, wobei ihre Mitten auf einem Kreis angeordnet und gleichmäßig voneinander beabstandet sind, wobei Induktoren (24-25 oder 26-27), deren Mitten auf dem gleichen Durchmesser angeordnet sind, von unterschiedlichen Generatoren (30, 29) gespeist werden.

3. Kochstelle nach Anspruch 2, mit zwei Generatoren, **dadurch gekennzeichnet, dass** bei jedem Paar von Induktoren, deren Mitten auf dem gleichen Durchmesser angeordnet sind, die Induktoren gleichzeitig jeweils von einem Generator gespeist werden und dass ein zyklisches Umschalten von einem Induktorpaar zum anderen stattfindet.

4. Kochstelle nach einem der Ansprüche 1 bis 3, **dadurch gekennzeichnet, dass** sie Induktoren (52-53, 54) mit unterschiedlichem Durchmesser aufweist.

5. Kochstelle nach einem der vorhergehenden Ansprüche, **dadurch gekennzeichnet, dass** die Induktoren der Kochstelle auf ein und demselben Träger aus nicht magnetischem Material angeordnet sind.

6. Kochstelle nach einem der vorhergehenden Ansprüche, **dadurch gekennzeichnet, dass** die Induktoren jeweils von einem Schutzring umgeben sind.

7. Kochstelle nach einem der vorhergehenden Ansprüche, **dadurch gekennzeichnet, dass** die Kochstelle eine Vorrichtung zur Erfassung einer Fehlanpassung einer Gruppe von Induktoren in Abhängigkeit von der Dezentrierung des mindestens zwei Induktoren bedeckenden Gefäßes und eine Vorrichtung (46) zur Anzeige dieser Dezentrierung aufweist.

8. Kochstelle nach Anspruch 1, **dadurch gekennzeichnet, dass** es mit dem Tastenfeld möglich ist, die den Induktoren gelieferte Leistung (39) und die Zeit, in der ihnen diese Leistung geliefert wird (38), individuell zu steuern.

9. Verfahren zum Garen durch Induktion auf einer Kochstelle nach einem der Ansprüche 1 bis 8, mit mehreren Induktoren (24-27; 52-54), **dadurch gekennzeichnet, dass** es einen Schritt umfasst, bei dem mindestens zwei der Induktoren abwechselnd eingeschaltet werden, um ein Gefäß zu erwärmen, dessen Boden Abmessungen besitzt, die im Wesentlichen der Fläche entsprechen, die die mehreren Induktoren umgrenzt, sowie einen Schritt, bei dem ein oder mehrere Induktoren getrennt eingeschaltet werden, damit jeder Induktor ein entsprechendes Gefäß erwärmt, das Abmessungen besitzt, die im Wesentlichen den Abmessungen des Induktors entsprechen.

## Claims

1. Multiple-use induction cooking hob, comprising at least two identical inductors (24-27, 52-54) which are external to one another, the surface area occupied by at least two inductors being essentially equal to the surface area of at least part of the recipients to the heated (21, 40), **characterized in that** it comprises at least one generator which is alternately connected by a switch to each of the inductors of a pair of inductors, said cooking hob enabling one or more inductors to be activated independently of one another each heating a separate recipient and enabling at least two inductors to be activated alternately, heating a single receptacle covering said inductors, and **in that** it comprises a control panel (31) which makes it possible to control the switching-on of any one of the inductors of said hob, or else of several of them independently of one another, each one heating a corresponding recipient, and making it possible to control the switching-on of several of them or all of them controlled at the same time by a button (32A, 32B) on said control panel so as to heat one and the same recipient by means of this plurality of inductors.

2. Hob according to Claim 1, **characterized in that**, in a hob with four identical inductors (24-27), said inductors are arranged symmetrically with respect to the centre of the hob (28), their centres being arranged on a circle and at regular spacings, inductors with centres arranged on the same diameter (24-25 or 26-27) being supplied by different generators (30, 29).

3. Hob according to Claim 2, comprising two generators, **characterized in that**, in each pair of inductors with centres arranged on the same diameter, the inductors are supplied simultaneously by one generator each, and cyclic switching takes place from one pair of inductors to the other.

4. Hob according to one of Claims 1 to 3, **characterized in that** it comprises inductors of different diameters (52-53, 54).

5. Hob according to one of the preceding claims, **characterized in that** the inductors of the hob are arranged on the same single support made of non-magnetic material.

6. Hob according to one of the preceding claims, **characterized in that** the inductors are surrounded respectively by a guard ring.

7. Hob according to one of the preceding claims, **characterized in that** the hob comprises a device for detecting a lack of suitability of a group of inductors as a function of the decentring of the recipient which covers at least two inductors, and a device which indicates this decentring (46).

8. Hob according to Claim 1, **characterized in that** the control panel makes it possible to individually control the power supplied to the inductors (39) and the time for which this power is supplied thereto (38).

9. Method for cooking by induction on a hob according to one of Claims 1 to 8, comprising a plurality of inductors (24-27; 52-54), **characterized in that** it comprises a step of activating at least one pair of said inductors alternately so as to heat a recipient which has a base with dimensions substantially equal to the surface area circumscribed by said plurality of inductors, and a step of activating one of more inductors independently of one another so as to heat by means of each inductor a corresponding recipient which has dimensions substantially equal to the dimensions of said inductor.
